# FASCICULE DE BREVET EUROPEEN

(11) **EP 2 686 903 B1**
(45) Date de publication et mention de la délivrance du brevet: **11.01.2017**
(21) Numéro de dépôt: 12708856.5
(22) Date de dépôt: 16.03.2012
(51) Int. Cl.: H01M 10/0525, H01M 10/058, H01M 10/48, H01M 4/131, H01M 4/134

(54) **PROCEDE DE DETERMINATION D'ETAT DE FIN DE CHARGE D'UN ACCUMULATEUR LI-ION A ELECTRODE NEGATIVE EN ALLIAGE, ACCUMULATEUR ET ASSEMBLAGE D'ACCUMULATEURS ASSOCIES**
VORRICHTUNG ZUR FESTELLUNG, WANN EINE LI-IONENBATTERIE MIT EINER NEGATIVEN ELEKTRODE AUS EINER LEGIERUNG VOLL AUFGELADEN IST, ZUGEHÖRIGE ZELLE UND BATTERIE
METHOD FOR DETERMINING WHEN A LI-ION CELL COMPRISING A NEGATIVE ELECTRODE MADE OF AN ALLOY IS FULLY CHARGED, ASSOCIATED CELL AND BATTERY

(30) Priorité: 18.03.2011 FR 1152264
(43) Date de publication de la demande: 22.01.2014
(73) Titulaire: Commissariat à l'Énergie Atomique et aux Énergies Alternatives, 75015 Paris (FR); Renault, 92100 Boulogne Billancourt (FR)
(72) Inventeur: REYNIER, Yvan, F-38120 Saint Egrève (FR); PORCHER, Willy, F-49240 Avrille (FR)
(74) Mandataire: Ahner, Philippe
(86) Numéro de dépôt international: PCT/EP2012/054632
(87) Numéro de publication internationale: WO 2012/126817

(56) Documents cités:
- WO-A1-2010/064392
- WO-A1-2011/012570
- WINTER M ET AL: "INSERTION ELECTRODE MATERIALS FOR RECHARGEABLE LITHIUM BATTERIES", ADVANCED MATERIALS, WILEY VCH VERLAG, DE, vol. 10, no. 10, 1 janvier 1998 (1998-01-01), pages 725-763, XP002947071, ISSN: 0935-9648, DOI: 10.1002/(SICI)1521-4095(199807)10:10<725:: AID-ADMA725>3.0.CO;2-Z

## Description

### DOMAINE TECHNIQUE

L'invention concerne un procédé de détermination de l'état de fin de charge d'un accumulateur Lithium-ion à électrode négative formée d'au moins un alliage.

L'invention vise à fournir un indicateur d'état de fin de charge simple et fiable pour ce type d'accumulateur Lithium-ion (Li-ion en abrégé).

L'invention concerne également un dispositif comprenant un accumulateur Lithium-ion de ce type ainsi qu'un assemblage de plusieurs accumulateurs de ce type appelé couramment « pack batterie », pour la mise en ouvre du procédé.

### ART ANTÉRIEUR

Une électrode négative d'un accumulateur Lithium-ion peut être formée d'un seul alliage, ou d'un mélange d'alliages, ou d'un mélange d'alliage(s) et d'autres matériau(x) d'insertion du lithium (le graphite, sous forme synthétique ou naturel, Li₄Ti₅O₁₂, TiO₂...). Cette électrode négative peut également contenir des additifs conducteurs électroniques ainsi que des additifs polymères qui lui confèrent des propriétés mécaniques et des performances électrochimiques appropriées à l'application batterie lithium-ion ou à son procédé de mise en oeuvre.

Au cours de son alliage électrochimique avec l'ion lithium Li⁺, l'électrode négative formée d'au moins un alliage subit une augmentation importante de sa maille cristallographique. Cette augmentation importante de la maille cristallographique de l'alliage ne peut pas être absorbée par la porosité intrinsèque de l'électrode négative. Autrement dit, lors des charges successives, l'électrode négative subit également des augmentations de dimensions, principalement de son épaisseur. De proche en proche, étant donné que l'ensemble des constituants d'une batterie Li-ion, c'est-à-dire séparateur, électrode, collecteurs, et emballage, ont une élasticité faible, l'augmentation importante de la maille cristallographique de l'alliage induit une contrainte sur l'emballage ou une déformation de celui-ci en fonction de sa rigidité.

L'expansion de l'alliage, lors d'une charge d'un accumulateur Li-ion à électrode négative formée d'au moins un alliage, peut être dommageable à l'accumulateur lui-même, à l'emballage le contenant, à l'assemblage de plusieurs accumulateurs Li-ion (pack batterie Li-ion) ou au système intégrant la batterie Li-ion ou le pack batterie Li-ion si la déformation de l'emballage, la pression à l'intérieur de celui-ci ou la pression exercée par celui-ci sur toute autre pièce n'est pas contrôlée.

Usuellement, la méthode classique pour obtenir un indicateur d'état de fin de charge pour un accumulateur Lithium-ion est de suivre l'état de charge à partir de sa tension et/ou du courant. Des méthodes plus ou moins complexes existent et prennent en compte notamment la résistance ohmique et/ou sa température. On peut citer ici la demande de brevet US 2010/0121591. Ces méthodes ne contrôlent pas concrètement la pression ou la déformation exercée mentionnées ci-dessus.

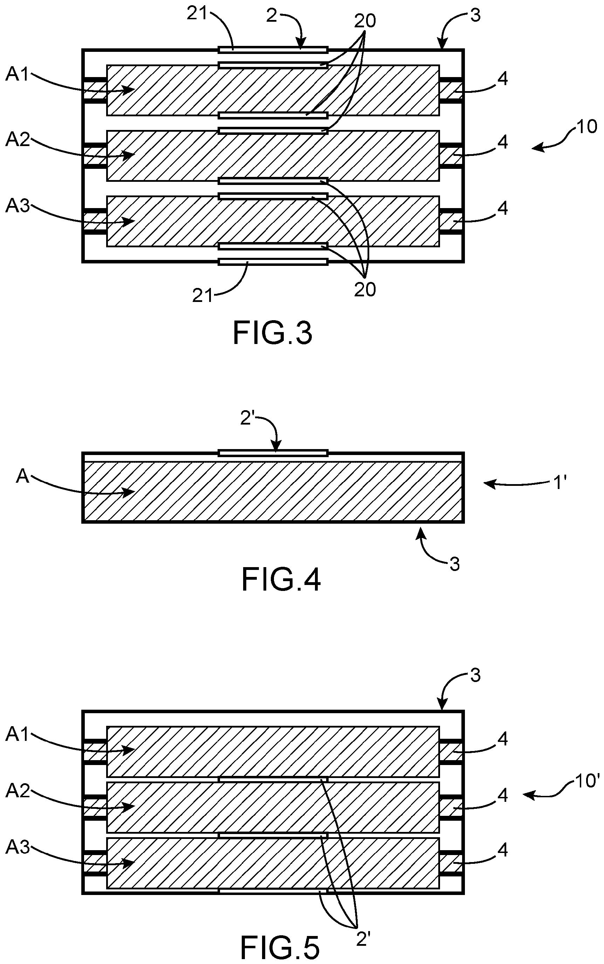

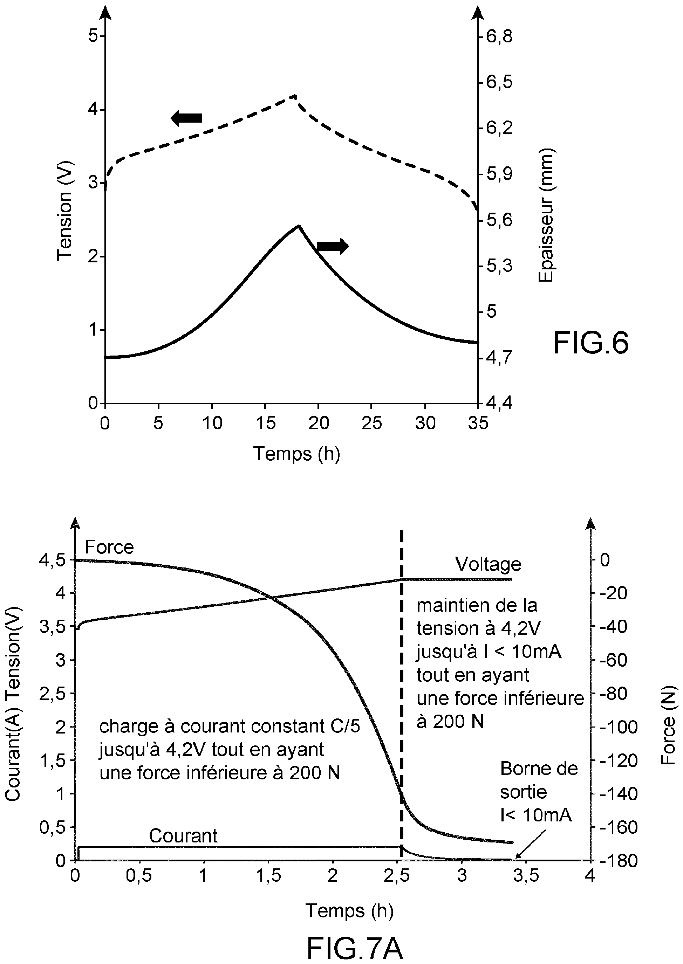

Il est connu du brevet US 5, 438,249 de mesurer en continu le déplacement physique de l'emballage souple de l'accumulateur Li-ion polymère ou l'augmentation de pression de celui-ci contre un élément, cette variation de déplacement ou augmentation de pression étant engendrée par l'augmentation d'épaisseur due à l'insertion ionique à l'électrode négative. Deux modes de réalisation sont prévus :
- celui de la figure 5 selon lequel un empilement d'accumulateurs Li-Ion polymère 40 est agencé entre deux plaques rigides 41, 43 maintenues entre elles par ressort et entre lesquelles est connectée une jauge de déplacement linéaire 45 permettant de détecter en continu le déplacement,
- celui de la figure 6 selon lequel un empilement de même type 50 et une poche souple 51 en appui permanent contre l'empilement 50 sont agencés dans un logement rigide 53 ; la poche souple 50 est remplie de liquide et se prolonge d'un tube 55 qui s'étend à l'extérieur du logement rigide 53. L'augmentation de pression génère une élévation du niveau de liquide dans le tube 55, ce qui permet une détection en continu.

Les détecteurs utilisés 45, 50, 55 doivent nécessairement être très précis car les augmentations d'épaisseur sont très faibles, de l'ordre de quelques micromètres. En outre, ces détecteurs ne sont pas simples de mise en oeuvre. Enfin, la détection de l'augmentation d'épaisseur n'est que globale, c'est-à-dire qu'elle ne peut être faite que pour l'ensemble de l'empilement 40 ou 50 et non individuellement pour chaque accumulateur 30 constituant ledit empilement.

Le document WO 2011/012570 décrit un arrangement une méthode pour déterminer un état de charge.

Le document WO 2010/064392 décrit une batterie.

Le but de l'invention est alors de proposer une solution simple à mettre en oeuvre et fiable, permettant de déterminer l'état de fin de charge d'un accumulateur Li-ion à électrode négative formée d'au moins un alliage, afin d'éviter toute détérioration de l'accumulateur, son emballage, d'un pack-batterie Li-ion à plusieurs accumulateurs de ce type, ou d'un système complet Li-ion comprenant notamment un pack-batterie Li-ion et des composants électroniques intégrés.

### EXPOSÉ DE L'INVENTION

Le but de l'invention est atteint par la revendication 1. Pour ce faire, il est décrit un procédé de détermination de l'état de fin de charge d'un accumulateur Lithium-ion à électrode négative formée d'au moins un alliage, selon lequel on détecte un appui surfacique avec une force déterminée de la partie externe de l'accumulateur contre un élément, l'appui surfacique étant engendré par l'augmentation d'épaisseur due à l'insertion ionique à l'électrode négative et définissant ainsi l'état de fin de charge.

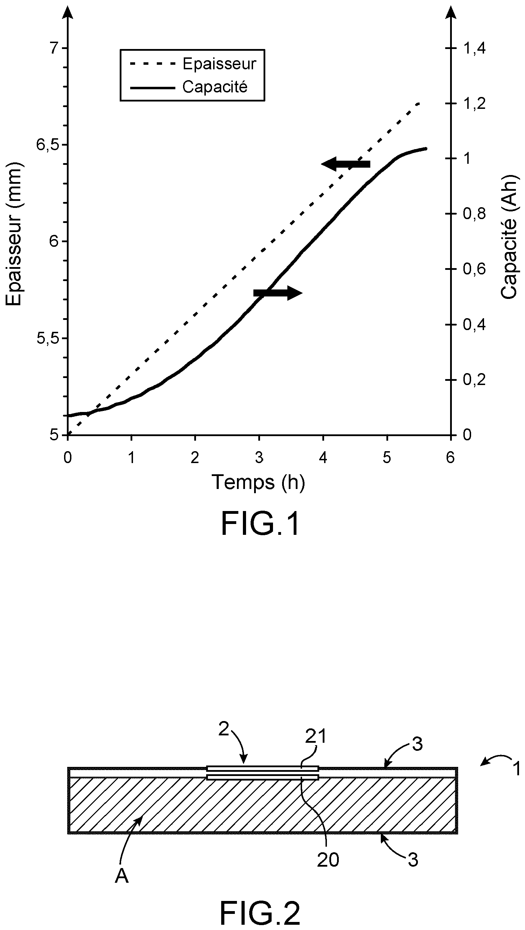

Les inventeurs ont tout d'abord montré que l'épaisseur d'une électrode négative formée d'au moins un alliage d'un accumulateur au lithium-ion évoluait de manière monotone comme la capacité de l'accumulateur en fonction du temps pendant une charge à courant constant terminée par une étape à potentiel imposé, comme cela ressort de la figure 1. Ils en ont en conclu que la charge d'un tel accumulateur pouvait être arrêtée dès que l'expansion volumique, principalement selon l'épaisseur de l'alliage d'électrode négative avait atteint un seuil. Ainsi, ils ont pensé à détecter ce seuil d'augmentation d'épaisseur d'électrode négative par l'expansion volumique de l' (des) alliage(s) en réalisant un appui surfacique avec un autre élément à fonction de butée mécanique. Ainsi, selon l'invention, en proposant une butée mécanique à l'accumulateur dont l'épaisseur augmente lors de la charge, on définit une fin d'état de charge simple à mettre en oeuvre et fiable. En outre, le procédé selon l'invention peut être utilisé en complément de méthodes de suivi de l'état de charge déjà existantes qui mesurent en continu ce dernier. Ici, grâce à l'invention, on s'assure qu'aucun endommagement n'est induit sur un accumulateur ou son environnement lors d'une étape de charge.

Avantageusement, on détecte une force déterminée de l'appui surfacique au moins égale à 50 N.

Avantageusement encore, l'augmentation d'épaisseur engendrant l'appui surfacique est au moins égale à 0,1 mm.

L'invention concerne également un dispositif pour la mise en oeuvre du procédé décrit précédemment, comprenant :
- au moins un accumulateur Lithium-ion, comprenant au moins une cellule électrochimique constituée d'au moins une électrode négative d'insertion au lithium formée d'au moins un alliage et une cathode de part et d'autre d'un électrolyte, et un emballage agencé pour contenir la(es) cellule(s) électrochimique avec étanchéité,
- une enveloppe rigide sous la pression exercée par au moins un accumulateur engendrée par l'augmentation d'épaisseur due à l'insertion ionique à l'électrode négative,
- au moins un moyen de fixation mécanique de l'accumulateur, lors de l'augmentation d'épaisseur due à l'insertion ionique à l'électrode négative, permettant de maintenir en place l'accumulateur dans l'enveloppe rigide,
- au moins un capteur de force fixé à la partie externe de l'emballage ou sur l'une des faces internes de l'enveloppe rigide, ledit capteur de force étant apte à prendre deux états, l'un dit état déchargé, dans lequel il est à distance ou en appui surfacique en dessous d'une force déterminée respectivement de l'enveloppe rigide ou de la partie externe de l'emballage et l'autre état, dit état de fin de charge, dans lequel il est en appui surfacique respectivement contre l'enveloppe rigide ou contre la partie externe de l'emballage avec la force déterminée.

On précise ici que lors de la charge de (s) l'accumulateur(s), le chargeur de batterie se trouve connecté au réseau électrique et donc la faible consommation électrique du capteur de force n'a que peu d'influence sur la charge proprement dite de (s) l'accumulateur(s) (batterie).

On précise également que :
- pour un accumulateur à géométrie de type prismatique, le(s) moyen(s) de maintien mécanique est (sont) agencé (s) dans un plan normal à la déformation principale de l'accumulateur,
- pour un accumulateur à géométrie de type cylindrique, le(s) moyen(s) de maintien mécanique est (sont) agencé(s) dans un plan normal à l'axe de révolution du cylindre.

Lorsqu'on souhaite réaliser un assemblage dit « pack-batterie », le dispositif peut comprendre :
- un empilement d'une pluralité d'accumulateurs Lithium-ion séparés entre des maintiens mécaniques latéraux pour maintenir en place l'(es) accumulateur(s) au sein de l'empilement, l'accumulateur du dessous étant maintenu en place par le(s) moyen(s) de fixation mécanique et l'accumulateur du dessus étant séparé de l'enveloppe rigide par au moins un espace vide ou directement en contact sur un capteur de force,
- une pluralité de capteurs de force dont au moins un capteur de force fixé à la partie externe de l'emballage de l'accumulateur du dessus l'empilement ou à l'intérieur de l'enveloppe rigide, et au moins un capteur de force fixé à la partie externe de l'emballage de chaque accumulateur au sein de l'empilement, chaque capteur de force au sein de l'empilement étant également apte à être dans un état de décharge, dans lequel il est à distance ou en appui surfacique en dessous d'une force déterminée de la partie externe d'un autre accumulateur et un état de fin de charge, dans lequel il est en appui surfacique contre la partie externe de l'emballage d'un autre accumulateur avec la force déterminée.

L'invention concerne également un dispositif pour la mise en oeuvre du procédé décrit précédemment, comprenant :
- au moins un accumulateur Lithium-ion, comprenant au moins une cellule électrochimique constituée d'au moins une électrode négative d'insertion au lithium formée d'au moins un alliage et une électrode positive séparés par un séparateur imbibé d'électrolyte, et un emballage agencé pour contenir la(es) cellule(s) électrochimique avec étanchéité,
- une enveloppe rigide sous la pression exercée par au moins un accumulateur engendrée par l'augmentation d'épaisseur due à l'insertion ionique à l'électrode négative,
- au moins un moyen de fixation mécanique de l'accumulateur lors de l'augmentation d'épaisseur due à l'insertion ionique à l'électrode négative, permettant de maintenir en place l'accumulateur dans l'enveloppe rigide,
- un contacteur dont la partie mobile est fixée à la partie externe de l'emballage de l'accumulateur et la partie fixe est fixée à l'intérieur de l'enveloppe rigide, la partie mobile du contacteur étant apte à se déplacer entre une position, dite position de décharge, dans laquelle elle est à distance de la partie fixe du contacteur, dite position de fin de charge, dans laquelle elle est en appui surfacique contre la partie fixe du contacteur avec une force déterminée.

Lorsqu'on souhaite réaliser un assemblage « pack-batterie », le dispositif peut comprendre :
- un empilement d'une pluralité d'accumulateurs Lithium-ion séparés entre eux par des maintiens mécaniques latéraux pour maintenir en place l'(es) accumulateur(s) au sein de l'empilement, l'accumulateur du dessous étant maintenu en place par le(s) moyen(s) de fixation mécanique et l'accumulateur du dessus étant séparé de l'enveloppe rigide (3) par au moins un espace vide,
- une pluralité de contacteurs dont au moins un contacteur avec sa partie mobile fixée à la partie externe de l'emballage de l'accumulateur du dessus et/ou du dessous de l'empilement et avec sa partie fixe fixée à l'intérieur de l'enveloppe rigide, et au moins un contacteur avec une partie mobile fixée à la partie externe de l'emballage de chaque accumulateur au sein de l'empilement, chaque partie mobile de contacteur au sein de l'empilement étant également apte à se déplacer entre une position de décharge, dans laquelle elle est à distance d'une autre partie mobile de contacteur fixée la partie externe d'un autre accumulateur et une position de fin de charge, dans laquelle elle est en appui surfacique contre l'autre partie mobile de contacteur fixée à la partie externe de l'emballage d'un autre accumulateur avec la force déterminée.

On précise ici que dans un « pack-batterie » selon l'invention, la fin de charge est atteinte dès que l'un des contacteurs se ferme ou un des capteurs de force a atteint sa force d'appui déterminée au préalable, de préférence d'au moins 50 N.

On précise également que dans un « pack-batterie » selon l'invention, on prévoit des moyens appropriés pour réaliser un équilibrage actif entre tous les accumulateurs du «pack-batterie » afin qu'ils restent tous au même état de charge lors d'une étape de charge.

On précise enfin que lorsque tous les accumulateurs de l'empilement présentent individuellement de part et d'autre un espace vide, autrement dit lorsqu'ils sont en quelque sorte flottants, on prévoit que tous les moyens de maintien mécanique latéraux, tels que des cales, aient sensiblement la même hauteur entre eux.

On peut ainsi grâce à des moyens simples de mises en oeuvre et dont la fiabilité est éprouvée (contacteur ou capteur de force), détecter une valeur seuil de déformation d'électrode négative formée d'au moins un alliage à ne pas dépasser pour éviter tout risque d'endommagement.

Le moyen de fixation mécanique entre accumulateur et enveloppe rigide peut être avantageusement de la colle. Ainsi, le moyen de fixation mécanique de l'accumulateur le plus proche du fond de l'enveloppe rigide peut être une colle pour fixer ledit accumulateur à cette dernière.

Chaque électrode négative peut être formée d'un seul alliage (Si, Sn, Al, Sb...), d'un mélange d'alliage(s) ou d'un mélange d'alliage(s) et d'autre(s) matériau(x) d'insertion au lithium, tel(s) que le graphite, Li₄Ti₅O₁₂, TiO₂.

Chaque électrode positive peut être formée d'un oxyde lamellaire, tel que LiMO₂, avec M=Co, Ni, Mn, Al, Mg ou un mélange de ceux-ci, ou d'un oxyde spinelle de formule générale LiM₂O₄, tel que la spinelle de manganèse LiMn₂O₄ ou la spinelle haute tension LiMn_{1.5}Ni_{0.5}O₄, ou en matériau (x) à base de phosphate, tel que LiMPO₄ avec M=Co, Ni, Fe, Mn, Mg, B ou un mélange de ceux-ci, ou d'oxydes lamellaires sur-stoechiométriques de formule Li₍₁₊ₓ₎MO_{y} avec M=Ni, Co, Mn, ou un mélange de ceux-ci dans lesquels 0.5<x<2 et 2<y<3.

Chaque électrolyte assurant la conduction ionique entre électrodes peut être liquide, tel qu'à base de carbonates ou sous forme de polymère gélifié conducteur des ions Lithium ou de liquide ionique. Tout autre composé stable aux potentiels envisagés (0 à 5 Volt vs. Li⁺/Li) et permettant la dissolution d'un sel de lithium, tel qu'usuellement LiPF₆, peut également être envisagé.

Chaque séparateur assurant l'isolation électrique entre électrodes est constitué d'une membrane poreuse à l'électrolyte qui l'imbibe, ladite membrane étant à base de polymère. Tout autre constituant isolant électrique et conducteur ionique des ions lithium peut également être envisagé.

### BRÈVE DESCRIPTION DES DESSINS

D'autres caractéristiques et avantages ressortiront mieux à la lecture de la description détaillée faite ci-après à titre illustratif et non limitatif en référence aux figures suivantes parmi lesquelles :
- la figure 1 montre l'évolution de la capacité et de l'épaisseur d'un accumulateur Lithium-ion à électrode négative formée d'au moins un alliage en fonction du temps pendant une charge à courant constant achevée par une étape à potentiel constant,
- la figure 2 est une vue schématique en coupe d'un dispositif selon un premier mode de l'invention avec un seul accumulateur Lithium-ion à électrode négative formée d'au moins un alliage,
- la figure 3 est une vue schématique en coupe d'un dispositif selon un premier mode de l'invention avec un empilement de trois accumulateurs Lithium-ion à électrode négative formée d'au moins un alliage,
- la figure 4 est une vue schématique en coupe d'un dispositif selon un deuxième mode de l'invention avec un seul accumulateur Lithium-ion à électrode négative formée d'au moins un alliage,
- la figure 5 est une vue schématique en coupe d'un dispositif selon un deuxième mode de l'invention avec un empilement de trois accumulateurs Lithium-ion à électrode négative formée d'au moins un alliage,
- la figure 6 montre l'évolution de la déformation selon l'épaisseur d'un accumulateur Lithium-ion à électrode négative formée d'au moins un alliage en fonction d'un cycle de charge/décharge au cours du temps,
- la figure 7A montre l'évolution de la contrainte, du potentiel et du courant d'un accumulateur Lithium-ion à électrode négative formée d'au moins un alliage, la contrainte étant mesurée par un capteur de force entre l'accumulateur et un élément fixe à proximité et la charge étant arrêtée comme selon l'état de l'art par une détection d'un seuil de courant,
- la figure 7B montre l'évolution de la contrainte, du potentiel et du courant d'un accumulateur Lithium-ion à électrode négative formée d'au moins un alliage, la contrainte étant mesurée par un capteur de force entre l'accumulateur et un élément fixe à proximité et la charge étant arrêtée comme selon l'invention par une détection d'un seuil de force par le capteur.

### EXPOSÉ DÉTAILLÉ DE MODES DE RÉALISATION PARTICULIERS

La description de la figure 1 a déjà été faite en préambule et ne le sera donc pas plus ici.

Un exemple d'accumulateur Lithium -ion à électrode négative formée d'au moins un alliage conforme à l'invention est maintenant décrit.

L'électrode négative est formée de :
- silicium sous forme de particules nanométriques ou micrométriques dans une proportion comprise entre 10 et 98% de la masse, formant un alliage avec le lithium,
- conducteurs électroniques dans une proportion comprise entre 1 et 20% de la masse,
- liants dans une proportion comprise entre 1 et 30% de la masse. Cette électrode négative poreuse, dont la porosité est comprise entre 15 et 50% du volume, est déposée sur un collecteur de courant en cuivre.

L'électrode positive est formée de :
- un oxyde de lithium de type LiNiₓMn_{y}Co_{z}O₂ dans une proportion comprise entre 80 et 98% de la masse,
- conducteurs électroniques dans une proportion comprise entre 1 et 10% de la masse,
- liants dans une proportion comprise entre 1 et 10% de la masse. Cette électrode positive poreuse, dont la porosité est comprise entre 15 et 50% du volume, est déposée sur un collecteur de courant en aluminium.

Ces deux électrodes (électrode négative et électrode positive) sont bobinées sur un mandrin prismatique séparées par un séparateur à base de polyéthylène poreux, de porosité comprise entre 20 et 60% du volume et de faible épaisseur, typiquement de 5 à 50µm.

L'épaisseur bobinée du coeur électrochimique, incluant les deux électrodes et le séparateur est de 4,5 mm, dont :
- environ 3 mm d'électrode positive et de collecteur en aluminium,
- environ 1 mm d'électrode négative et de collecteur en cuivre,
- environ 0,5 mm de séparateur.

Le coeur électrochimique est emballé avec un sachet souple, constituant un emballage souple, qui est thermo scellé au moment de l'activation avec un électrolyte qui est un mélange de carbonate contenant un sel de lithium, comme par exemple un mélange d'éthylène carbonate et de diméthyle carbonate en proportion 1 :1 avec du LiPF₆ à 1 mol/L en concentration.

Ainsi, un accumulateur Li-ion à électrode négative formée d'au moins un alliage selon l'invention a une épaisseur d'environ 4,7 mm, lorsqu'il est activé.

Lors des cycles de charge/décharge, l'accumulateur Li-ion selon l'invention subit des variations de son épaisseur du fait de la faible rigidité de l'emballage. On a mesuré ces variations d'épaisseur de l'accumulateur Li-ion selon l'invention à partir d'une jauge de contrainte fixée sur la partie externe de l'emballage souple : les mesures sont reportées en figure 6. On peut ainsi voir que l'épaisseur peut être augmentée jusqu'à environ 5.7 mm sur le premier cycle, ce qui représente une augmentation d'environ 21% par rapport à l'épaisseur de l'accumulateur activé.

On précise que sur cette figure 6, le régime est indiqué égal à C/20, ce qui correspond à 20 heures nécessaires pour effectuer une charge ou une décharge.

Ainsi, pour déterminer l'état de fin de charge on peut intégrer un contacteur ou un capteur de force dans une enveloppe rigide, d'accumulateur unique ou d'un empilement d'accumulateurs afin d'éviter qu'une contrainte trop importante apparaisse sur l'enveloppe rigide.

Les figures 2 et 4 montrent l'intégration respectivement d'un contacteur 2 ou d'un capteur de force 2' dans un dispositif 1, 1' selon l'invention comprenant un seul accumulateur Lithium-ion A tel que défini dans l'exemple ci-dessus. Plus exactement, l'accumulateur A est maintenu en place dans l'enveloppe rigide 3 par collage sur sa face en regard de l'enveloppe rigide et où la déformation, due à l'insertion ionique à l'électrode négative, est principale. La partie mobile 20 du contacteur 2 est fixée sur la partie externe de l'emballage souple de l'accumulateur A. La partie fixe 21 du contacteur 2 est fixée sur la paroi interne de l'enveloppe rigide en regard de la partie mobile 20. Le capteur de force 2' est quant à lui fixé sur la paroi interne de l'enveloppe rigide 3.

Les figures 3 et 5 montrent l'intégration respectivement d'un contacteur 2 ou d'un capteur de force 2' dans un dispositif 10, 10' selon l'invention comprenant un empilement de trois accumulateurs Lithium-ion A1, A2, A3 tels que définis dans l'exemple ci-dessus. L'agencement des accumulateurs est réalisé comme pour les figures 2 et 4, à ceci près que des maintiens mécaniques 4 latéraux, agencés dans le plan normal à la déformation principale, maintiennent en place l'accumulateur A2 intercalé dans l'empilement. La fixation des contacteurs 2 et capteurs de force 2' est réalisée également comme pour les figures 2 et 4, à ceci près que deux parties mobiles 20 de contacteurs ou deux capteurs de force 2' sont fixés de part et d'autre de la partie externe de l'emballage de l'accumulateur A2 du centre de l'empilement.

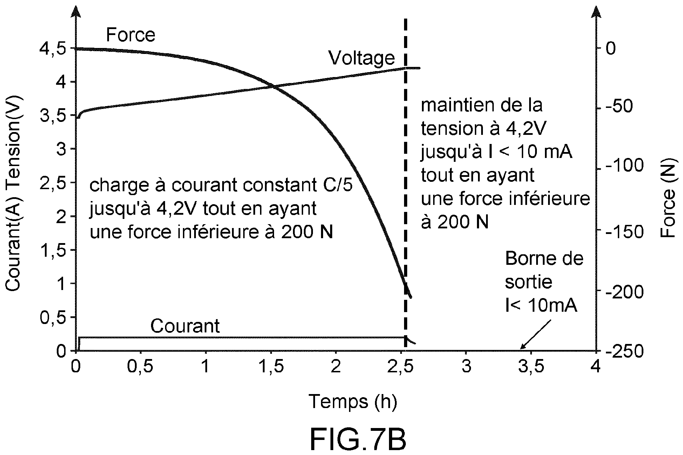

Ainsi, on définit un seuil de force des contacteurs 2 ou capteurs de force 2' par rapport à des considérations sur la déformation acceptable de la l'enveloppe rigide 3 pour l'utilisation qui est ici de 200 N. Le seuil de tension en charge, qui repose sur des considérations électrochimiques, est défini à 4,2 V en charge avec un courant inférieur à 10mA. Ces deux indicateurs de fin de charge sont bien complémentaires comme le montrent les figures 7A et 7B, où la charge est stoppée respectivement par l'indicateur de fin de charge en potentiel comme selon l'état de l'art et/ou par l'indicateur de fin de charge 2, 2' en contrainte selon l'invention.

Sur ces figures 7A et 7B, la terminologie C/n correspond au nombre n d'heures nécessaires pour effectuer un cycle C. L'abréviation CV signifie que l'on fixe la tension à une valeur précise tout en laissant le courant diminuer pour finir la charge.

On précise que dans le cadre de l'invention, le réglage d'un contacteur ou d'un capteur de force est définitif et ne varie pas en fonction du nombre de cycles de charge/décharge de l' (des) accumulateur(s). On définit ainsi une fin de l'état de charge dès que la déformation maximum est atteinte.

## Revendications

1. Procédé de détermination de l'état de fin de charge d'un empilement d'accumulateurs Lithium-ion (A1, A2, A3), à électrode négative formée d'au moins un alliage, les accumulateurs Lithium-ion étant séparés par des maintiens mécaniques latéraux destinés à maintenir en place lesdits accumulateurs au sein de l'empilement, selon lequel on détecte des appuis surfaciques avec des forces déterminées entre les surfaces externes des accumulateurs en vis-à-vis, lesdits appuis surfaciques étant engendrés par l'augmentation d'épaisseur d'au moins un accumulateur, due à l'insertion ionique à son électrode négative, et définissant ainsi l'état de fin de charge.

2. Procédé selon la revendication 1, selon lequel on détecte une force déterminée d'un appui surfacique au moins égale à 50 N.

3. Procédé selon la revendication 1 ou 2, selon lequel l'augmentation d'épaisseur engendrant l'appui surfacique est au moins égale à 0.1 mm.

4. Dispositif (10) pour la mise en oeuvre d'un procédé selon l'une des revendications 1 à 3, comprenant :
- un empilement d'une pluralité d'accumulateurs Lithium-ion (A1, A2, A3), chaque accumulateur comprenant au moins une cellule électrochimique constituée d'au moins une électrode négative d'insertion au lithium, formée d'au moins un alliage, une électrode positive et un séparateur imbibé d'électrolyte et un emballage agencé pour contenir chaque cellule électrochimique avec étanchéité ;
- une enveloppe rigide (3) sous la pression exercée par au moins un accumulateur, engendrée par l'augmentation de son épaisseur, due à l'insertion ionique à son électrode négative ;
- l'accumulateur (A2) dans l'empilement d'accumulateur (A1, A2, A3) étant maintenu en place dans l'enveloppe rigide (3) par des maintiens mécaniques latéraux (4), agencés dans un plan normal à la déformation principale ;
- au moins deux parties mobiles (20) de contacteurs ou deux capteurs de force (2') fixés de part et d'autre de la partie externe de l'emballage de l'accumulateur (A2), chaque capteur (20, 2') au sein de l'empilement étant également apte à être dans un état de décharge, dans lequel il est à distance ou en appui surfacique en dessous d'une force déterminée de la partie externe d'un autre accumulateur (A1, A3) et un état de fin de charge, dans lequel il est en appui surfacique contre la partie externe de l'emballage d'un autre accumulateur (A1, A3) avec la force déterminée.

5. Dispositif (10') selon la revendication 4, comprenant au moins un capteur (20, 2') fixé à la partie externe de l'emballage de l'accumulateur du dessus (A1) ou à l'intérieur de l'enveloppe rigide.

6. Dispositif (10') selon la revendication 4 ou 5, comprenant :
- l'accumulateur du dessous (A3) maintenu en place par des moyens de fixation mécanique (4) et l'accumulateur du dessus (A1) séparé de l'enveloppe rigide (3) par au moins un espace vide ;
- au moins un contacteur (2) avec sa partie mobile fixée à la partie externe de l'emballage de l'accumulateur du dessus (A1) de l'empilement et sa partie fixe fixée à l'intérieur de l'enveloppe rigide.

7. Dispositif (1, 1', 10, 10') selon la revendication 6, selon lequel le moyen de fixation mécanique de l'accumulateur (A3) le plus proche du fond de l'enveloppe rigide est une colle.

8. Dispositif selon l'une des revendications 4 à 7, dans lequel chaque électrode négative est formée d'un seul alliage ou d'un mélange d'alliage(s) et d'autre(s) matériau(x) d'insertion au Lithium, tel(s) que le graphite, Li₄Ti₅O₁₂, TiO₂.

9. Dispositif selon l'une des revendications 4 à 8, dans lequel chaque électrode positive est formée d'un oxyde lamellaire, tel que LiMO₂, avec M=Co, Ni, Mn, Al, Mg ou un mélange de ceux-ci, ou d'un oxyde spinelle de formule générale LiM₂O₄, tel que la spinelle de manganèse LiMn₂O₄ ou la spinelle haute tension LiMn_{1.5}Ni_{0.5}O₄, ou en matériau (x) à base de phosphate, tel que LiMPO₄ avec M=Co, Ni, Fe, Mn, Mg, B ou un mélange de ceux-ci, ou d'oxydes lamellaires sur-stoechiométriques de formule Li₍₁₊ₓ₎MO_{y} avec M=Ni, Co, Mn, ou un mélange de ceux-ci dans lesquels 0.5<x<2 et 2<y<3.

10. Dispositif selon l'une des revendications 4 à 9, dans lequel chaque électrolyte assurant la conduction ionique entre les électrodes est liquide, par exemple à hase de carbonates ou sous forme de polymère gélifié, conducteur des ions Lithium ou de liquide ionique.

11. Dispositif selon l'une des revendications 4 à 10, dans lequel chaque séparateur assurant l'isolation électrique entre électrodes est constitué d'une membrane poreuse à l'électrolyte qui l'imbibe, ladite membrane étant à base de polymère.

## Patentansprüche

1. Verfahren zur Bestimmung des Ladungsendezustands eines Stapels von Lithium-Ionen-Akkus (A1, A2, A3) mit einer negativen Elektrode, die durch wenigstens eine Legierung gebildet ist, wobei die Lithium-Ionen-Akkus durch laterale mechanische Halterungen separiert sind, die dazu ausgelegt sind, die Akkus innerhalb des Stapels an ihrer Stelle zu halten, wobei man Oberflächen-Abstützungen mit bestimmten Kräften zwischen den externen Oberflächen der gegenüberliegenden Akkus erfasst, wobei die Oberflächen-Abstützungen durch die Zunahme der Dicke wenigstens eines Akkus erzeugt werden aufgrund der Einführung von Ionen an seiner negativen Elektrode und somit den Ladungsendezustand definieren.

2. Verfahren nach Anspruch 1, wobei man eine bestimmte Kraft einer Oberflächen-Abstützung von wenigstens gleich 50 N erfasst.

3. Verfahren nach Anspruch 1 oder 2, wobei die Zunahme der Dicke, die die Oberflächen-Abstützung erzeugt, wenigstens gleich 0,1 mm beträgt.

4. Vorrichtung (10) zur Durchführung eines Verfahrens nach einem der Ansprüche 1 bis 3, umfassend:
- einen Stapel mit einer Mehrzahl von Lithium-Ionen-Akkus (A1, A2, A3), wobei jeder Akku wenigstens eine elektrochemische Zelle umfasst, gebildet durch wenigstens eine negative Lithiumeinführungselektrode, die aus wenigstens einer Legierung gebildet ist, eine positive Elektrode sowie einen mit Elektrolyt getränkten Separator sowie eine Verpackung, die dazu ausgelegt ist, jede elektrochemische Zelle dicht zu enthalten;
- eine Hülle (3), die unter dem Druck starr ist, der durch wenigstens einen Akkumulator ausgeübt wird und durch die Zunahme seiner Dicke aufgrund der Ioneneinführung an seiner negativen Elektrode erzeugt ist;
- wobei der Akku (A2) in dem Akkustapel (A1, A2, A3) durch laterale mechanische Halterungen (4), die in einer Ebene senkrecht zur Hauptverformung angeordnet sind, an seiner Stelle in der starren Hülle (3) gehalten wird;
- wenigstens zwei bewegliche Kontaktteile (20) oder zwei Kraftsensoren (2'), die auf beiden Seiten des äußeren Teils der Verpackung des Akkus (A2) befestigt sind, wobei jeder Sensor (20, 2') innerhalb des Stapels ferner dazu ausgelegt ist, in einem Entladungszustand zu sein, in dem er im Abstand vom äußeren Teil eines anderen Akkus (A1, A3) oder in Oberflächen-Abstützung unterhalb einer vorbestimmten Kraft ist, sowie einem Ladungsendezustand, in dem er in Oberflächen-Abstützung gegen das äußere Teil der Verpackung eines anderen Akkus (A1, A3) mit der vorbestimmten Kraft ist.

5. Vorrichtung (10') nach Anspruch 4, umfassend wenigstens einen Sensor (20, 2'), der am äußeren Teil der Verpackung des oberen Akkus (A1) oder im Inneren der starren Hülle befestigt ist.

6. Vorrichtung (10') nach Anspruch 4 oder 5, umfassend:
- den unteren Akku (A3), der durch mechanische Befestigungsmittel (4) an seiner Stelle gehalten wird, und den oberen Akku (A1), der durch wenigstens einen Hohlraum von der starren Hülle (3) separiert ist;
- wenigstens einen Kontakt (2), dessen bewegliches Teil am äußeren Teil der Verpackung des oberen Akkus (A1) des Stapels befestigt ist, und dessen festes Teil im Inneren der starren Hülle befestigt ist.

7. Vorrichtung (1, 1', 10, 10') nach Anspruch 6, wobei das mechanische Befestigungsmittel des Akkus (A3), der dem Boden der starren Hülle am nächsten ist, ein Klebstoff ist.

8. Vorrichtung nach einem der Ansprüche 4 bis 7, wobei jede negative Elektrode aus einer einzigen Legierung gebildet ist oder aus einer Mischung von einer Legierung/Legierungen und (einem) anderen Lithiumeinführmaterial(ien) wie zum Beispiel Graphit, L₁₄T₁₅O₁₂, TiO₂.

9. Vorrichtung nach einem der Ansprüche 4 bis 8, wobei jede positive Elektrode aus einem Schichtoxid gebildet ist, wie zum Beispiel LiMO₂ mit M=Co, Ni, Mn, Al, Mg oder eine Mischung derselben, oder aus einem Spinelloxid der allgemeinen Formel LiM₂O₄ wie zum Beispiel das Manganspinell LiMn₂O₄ oder das Hochspannungsspinell LiMn_{1.5}Ni_{0.5}O₄ oder aus (einem) Material(ien) auf Phosphatbasis wie zum Beispiel LiMPO₄ mit M=Co, Ni, Fe, Mn, Mg, B oder eine Mischung derselben, oder aus überstöchiometrischen Schichtoxiden der Formel Li₍₁₊ₓ₎MO_{y} mit M=Ni, Co, Mn oder eine Mischung derselben, wobei 0,5<x<2 und 2<y<3.

10. Vorrichtung nach einem der Ansprüche 4 bis 9, wobei jeder Elektrolyt, der die Ionenleitung zwischen den Elektroden sicherstellt, flüssig ist, beispielsweise auf Basis von Karbonaten, oder in Form von geliertem Polymer, als Leiter von Lithium-Ionen oder von ionischer Flüssigkeit.

11. Vorrichtung nach einem der Ansprüche 4 bis 10, wobei jeder Separator, der die elektrische Isolierung zwischen Elektroden sicherstellt, durch eine Membran gebildet ist, die porös ist für den tränkenden Elektrolyten, wobei die Membran auf Polymerbasis ist.

## Claims

1. A method for determining the end-of-charging condition of a lithium-ion accumulator (A, A2, A3) with a negative electrode formed with at least one alloy, the lithium-ion accumulators being separated by lateral mechanical supports for holding said accumulators in place within the stack, according to which surface pressures with determined forces between the external surfaces of the facing accumulators, said surface pressures being generated by the thickness increase of at least one accumulator, due to ion insertion at its negative electrode and thereby defining the end-of-charging condition.

2. The method according to claim 1, according to which a determined force of a surface pressure at least equal to 50 N is detected.

3. The method according to claim 1 or 2, according to which the thickness increase generating the surface pressure is at least equal to 0.1 mm.

4. A device (10) for applying a method according to one of claims 1 to 3, comprising:
- a stack of a plurality of lithium-ion accumulators (A1, A2, A3), each accumulator comprising at least one electrochemical cell consisting of at least one negative electrode with lithium insertion, formed with at least one alloy, a positive electrode and a separator impregnated with electrolyte and a packaging laid out for containing each electrochemical cell with a seal;
- a stiff casing (3) under the pressure exerted by said at least one accumulator, generated by the increase of its thickness due to ion insertion at its negative electrode;
- the accumulator (A2) in the accumulator stack (A1, A2, A3) being held in place in the stiff casing (3) with lateral mechanical supports (4), laid out in a plane normal to the main deformation;
- at least two mobile portions (20) of contactors or two force sensors (2') attached on either side of the external portion of the packaging of the accumulator (A2), each sensor (20, 2') within the stack being also capable of being in a discharge condition, in which it is at a distance or bearing upon a surface under a determined force from the external portion of another accumulator (A1, A3) and an end-of-charging condition, in which it bears upon a surface against the external portion of the packaging of another accumulator (A1, A3) with the determined force.

5. The device (10') according to claim 4, comprising at least one sensor (20, 2') attached to the external portion of the packaging of the accumulator of the top (A1) or to the inside of the stiff casing.

6. The device (10') according to claim 4 or 5, comprising:
- the accumulator of the bottom (A3) held in place by mechanical attachment means (4) and the accumulator of the top (A1) separated from the stiff casing (3) by at least one empty space;
- at least one contactor (2) with its mobile portion attached to the external portion of the packaging of the accumulator of the top (A1) of the stack and its fixed portion attached to the inside of the stiff casing.

7. The device (1, 1', 10, 10') according to claim 6, according to which the means for mechanically attaching the accumulator (A3) the closest to the bottom of the stiff casing is an adhesive.

8. The device according to one of claims 4 to 7, wherein each negative electrode is formed with a single alloy or with a mixture of alloy(s) and of other lithium insertion material(s) such as graphite Li₄Ti₅O₁₂, TiO₂.

9. The device according to one of claims of 4 to 8, wherein each positive electrode is formed with a lamellar oxide, such as LiMO₂, with M=Co, Ni, Mn, Al, Mg or a mixture thereof, or a spinel oxide of general formula LiM₂O₄, such as manganese spinel LiMn₂O₄ or high voltage spinel LiMn_{1.5}Ni_{0.5}O₄, or in material (s) based on phosphate, such as LiMPO₄ with M=Co, Ni, Fe, Mn, Mg, B or a mixture thereof, or over-stoichiometric lamellar oxides of formula Li₍₁₊ₓ₎MO_{y} with M=Ni, Co, Mn, or a mixture thereof wherein 0,5<x<2 and 2<y<3.

10. The device according to one of claims 4 to 9, wherein each electrolyte ensuring iron conduction between the electrodes is in liquid, for example based on carbonates or in the form of a gelled polymer conducting lithium ions or of a ionic liquid.

11. The device according to one of claims 4 to 10, wherein each separator ensuring electric insulation between electrodes consists of a membrane porous to the electrolyte which impregnates it, said membrane being based on polymer.
